# EUROPEAN PATENT APPLICATION

(11) **EP 1 637 444 A2**
(43) Date of publication of application: **22.03.2006**
(21) Application number: 05397016.6
(22) Date of filing: 15.09.2005
(51) Int. Cl.: B62K 19/00

(54) **Modular bicycle frame**

(30) Priority: 15.09.2004 FI 20045343
(71) Applicant: Helkama Velox Oy, 10960 Hanko (FI)
(72) Inventor: Autero, Markku, 10940 Hanko (FI)
(74) Representative: LEITZINGER OY

(57) **Abstract**

The present invention relates to a modular bicycle frame (1), comprising at least an upper frame unit (2) and a lower frame unit (3). The upper frame unit (2) includes two half-frames (20, 21), which are dismountably connected to each other and provide a mechanically openable box assembly. The lower frame unit (3) includes two half-frames (30, 31), which are dismountably connected to each other and provide a mechanically openable box assembly.

## Description

The present invention relates to a modular bicycle frame, comprising at least an upper frame unit, including two half-frames which are dismountably connected to each other, and a lower frame unit, including two half-frames which are dismountably connected to each other.

Modular bicycle frames are prior known, one of which is disclosed in Application publication WO 94/06670. It consists principally of a single upper frame block, having two frame units attached as its obliquely down and rearward pointing extension. Although such a frame is made of modules or units, the completed frame nevertheless makes up a single block in itself, which can be no longer dismantled for individual components once it has been assembled. The publication has no teaching about dismounting an assembled frame or about a possibility of replacing any single component of the frame. According to the publication, the modules are attached to each other with epoxy or the like agent (adhesive), making the frame structure non-dismountable or its dismounting highly inconvenient and likely to disrupt the entire frame structure. In the absence of an adhesive or the like joint, the frame is not functional.

Prior known, for example from Patent application US 2003/0234510, is also a bicycle frame structure, comprising a traditional assembly of tube elements. However, the structure is dismembered and the members are joined with each other by means of telescopically fitting connection pieces. In this case, the frame likewise makes up a single block in itself, as the making of every joint has also involved the use of an adhesive, rendering the frame structure (once assembled) very difficult to dismantle.

It is an object of the present invention to eliminate or at least substantially alleviate the above drawbacks.

The above object of the present invention is accomplished according to the present invention in such a way that the upper frame unit has its half-frames providing a mechanically openable box assembly, and that the lower frame unit has its half-frames providing a mechanically openable box assembly.

The inventive modular frame structure enables a dismountable attachment of modules to each other. In addition to this, assembling (connecting modules to each other) and disassembling (disconnecting modules from each other) the frame are simple and quick procedures by virtue of their configuration. Thus, the replacement of a damaged part is also quick and easy. A given frame member can also be replaced with a member different in terms of its design and function. Furthermore, the box-type frame structure makes it possible that various, even maintenance-involving components be disposed inside the frame for protecting such components and not having them disrupt the bicycle's appearance. It is also possible that assembling the frame be at least partially automated.

Preferred embodiments of the present invention are set forth in the dependent claims.

The present invention will now be described in more detail with reference to the accompanying drawings, in which:
- Fig. 1: shows a dismantled frame in an axonometric view,
- Fig. 2: shows a frame of the invention in a schematic elevation,
- Fig. 3A: shows the frame schematically in a partial cross-section,
- Fig. 3B: shows schematically a frame cross-section according to a second embodiment, and
- Fig. 3C: shows schematically a frame cross-section according to a third embodiment.

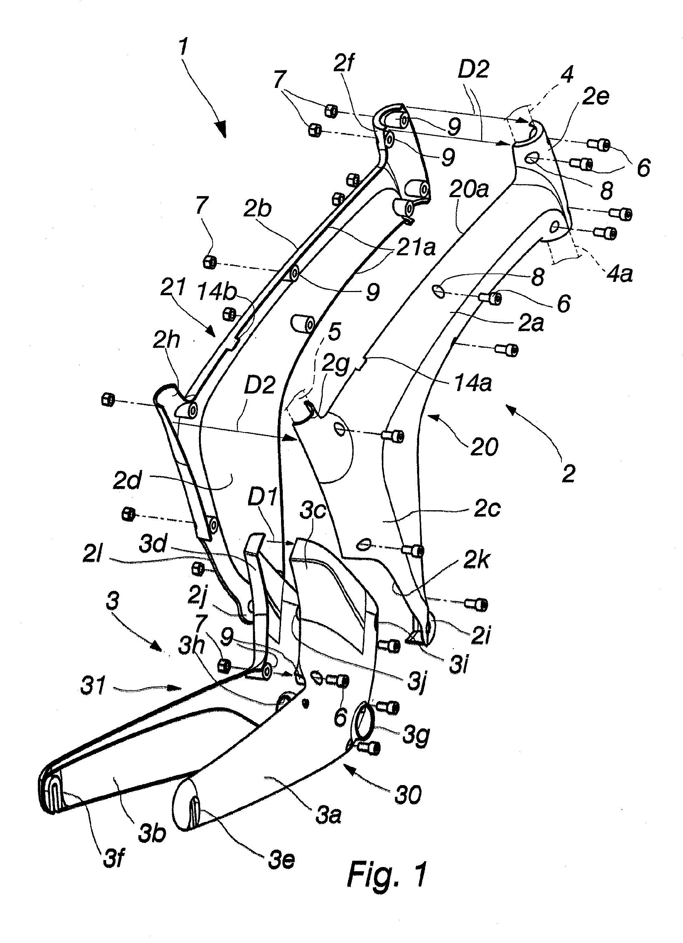

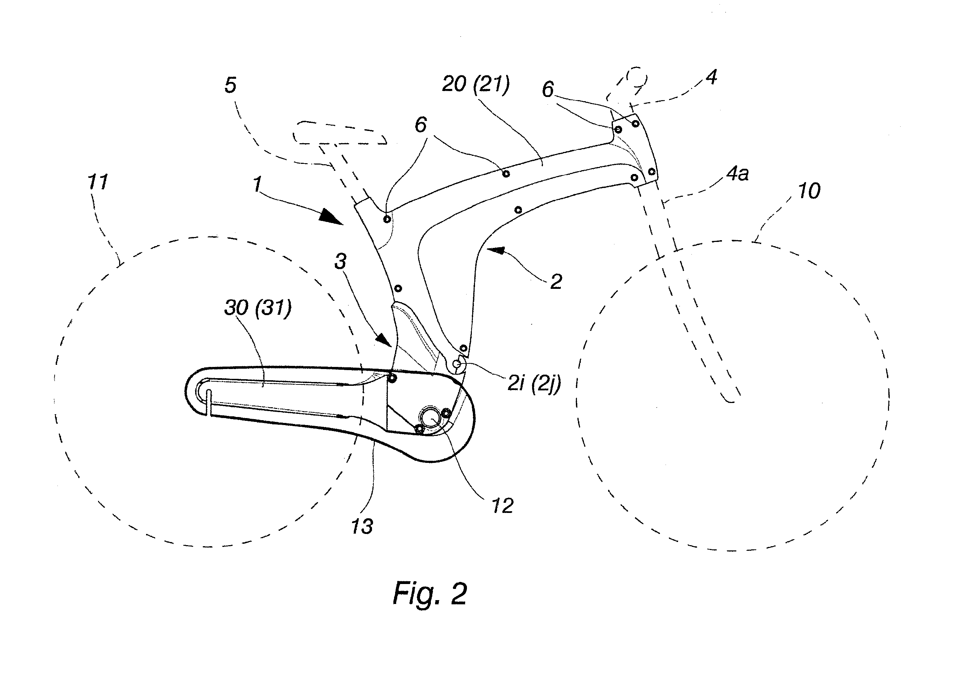

Thus, fig. 1 shows a dismounted modular bicycle frame of the invention, which is designated by reference numeral 1. An integral frame 1, depicted in a schematic elevation in fig. 2, is obtained after connecting four frame-building modules to each other as described hereinbelow, preferably in the sequence indicated by arrows D1-D2. Regarding its design, the frame 1 is preferably a box-type, that is hollow structure. Consequently, the frame 1 has its walls defining a void capable of accommodating components relevant for various functions of the bicycle. Therefor, the frame interior (internal surface) can be provided with attachment points or spots. The inventive frame is preferably manufactured by casting and options for the employed material include castable, high-strength and wear-resistant materials, such as steel, magnesium, titanium or any appropriate metal alloy, carbon fiber and/or plastics.

A front section of the frame 1 consists of an upper frame unit 2, which is divided for two segments, that is half-frames 20 and 21 detachable from each other. The upper frame unit 2 includes a substantially forward extending frame member 2a, 2b. The frame member has its first end provided with elements 2e, 2f for mounting a stem 4 and a front fork 4a and thereby also a front wheel 10 pivotably on the frame 1.

The upper frame unit 2 has its second end provided with a substantially downward or obliquely downward extending frame member 2c, 2d. This frame member has its top end provided with means 2g, 2h for securing a saddle support or seat post 5 to the frame 1.

A rear section of the frame consists of a lower frame unit 3, which is divided the same way as the upper frame unit for two segments, that is half-frames 30 and 31 detachable from each other. The lower frame unit 3 includes a substantially upward extending frame member 3c, 3d. This member has been placed in engagement with an aperture 2k, 2l provided for example in the downward extending frame member 2c, 2d of the upper frame unit 2. The frame members 3c, 3d and 2c, 2d are preferably provided with elements 2i, 2j and 3i, 3j, by which the upper frame unit 2 and the lower frame unit 3 can be preferably articulated to each other by means of a separate link element (not shown).

In addition to this, the lower frame unit 3 includes preferably a rearward extending frame member 3a, 3b set in engagement with the upward extending frame member 3c, 3d. Its first end (forward end) is provided with means 3g, 3h for placing a crankset 12 in engagement with the frame 1. Over a substantial lengthwise distance thereof, the rearward extending frame member 3a, 3b constitutes a so-called rear fork, the frame member 3a, 3b having its second end (rearward end) provided preferably with brackets 3e, 3f or the like for having a rear wheel 11 mounted on the frame 1 rotatably about its axle.

The upper frame unit 2 has its half-frames 20 and 21 of the present invention mechanically connected to each other, preferably by screw joints. Accordingly, the half-frames 20 and 21 are provided with locations both for screws 6 and for a nut 7 matching each screw. In the illustrated embodiment, the screws 6 have their locations 8 placed in the half-frame 20 adjacent to edges 20a of the half-frame 20. The screw 6 can be extended thereby through the wall for engagement with the second half-frame 21. The nuts 7 have their locations placed in the half-frame 21 adjacent to edges 21a of the half-frame 21, in other words on the opposite side of the frame 1, such that the screws' 6 locations 8 and the nuts' 7 locations 9 coincide with each other. Hence, the screws 6 can be extended through their locations 8 to meet the nuts 7 placed on the second half-frame for tightening and detachably securing the half-frames 20 and 21 against each other. Although a similar screw joint can of course be structurally designed in other ways as well, the locations 8 and 9 established according to the depicted embodiment enable the countersinking of screws and nuts within the frame's external surface. The lower frame unit 3 has its half-frames 30 and 31 also provided with similar screw joints. Some screw connections can be utilized for mounting a separate front and/or rear rack (not shown) on the frame 1.

There are also other ways of dismountably connecting half-frames mechanically to each other, such as by riveting, connection bars, snap joints, various clamp rings, etc.

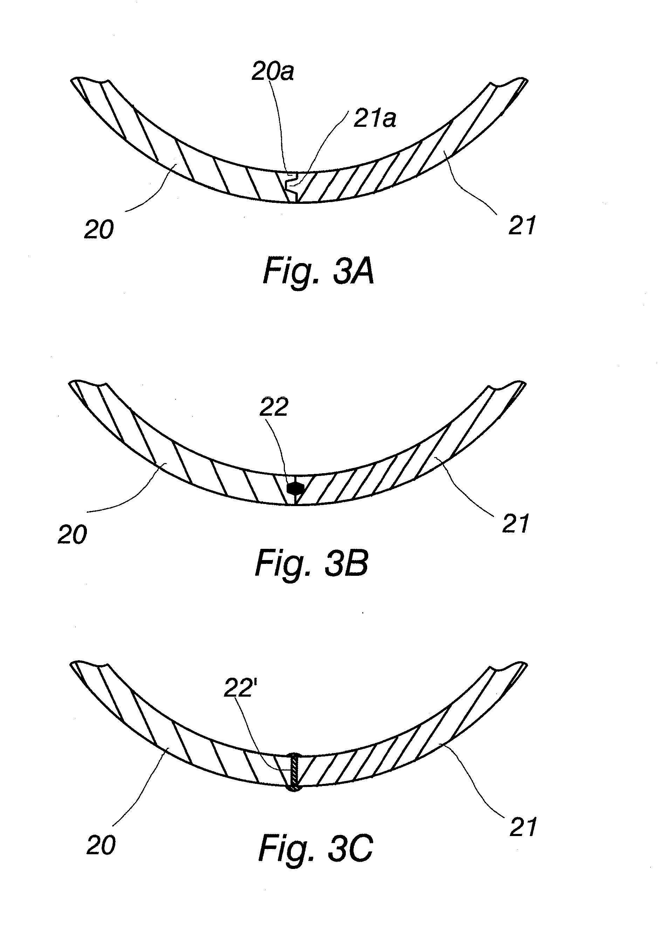

Furthermore, the integrated components of the frame 1 hence constitute a hollow box-type assembly. Thus, the half-frames 20 and 21 (likewise 30 and 31) have their opposite, mutually facing edges 20a and 21a establishing a coupling joint. Fig. 3A shows by way of example a partial cross-section for the upper frame unit's 2 joined half-frames 20 and 21. It can be seen from fig. 3A that the half-frame 20 has its edge 20a, or at least a portion of its edge 20a, provided preferably with a female tongue-and-groove and the opposite half-frame 21 has its edge 21a, or at least a portion of its edge 21a, provided preferably with a male tongue-and-groove. By way of the tongue-and-grooves, the half-frames have their coupling joints "tied" to each other, thus improving the box assembly in terms of its structural strength (behaves essentially the way of a closed profile) and obstructing a relative movement of the half-frames as the mechanical connection (screws) compresses the halves to each other.

The above-described tongue-and-groove structure can be replaced with other "tying" arrangements. Figs. 3B and 3C illustrate two preferred optional embodiments for a female/male tongue-and-groove. Fig. 3B depicts coupling joints, having fitted therebetween a separate insert 22 angular in cross-section and provided with chamfered surfaces for "tying" the half-frames to each other. Fig. 3C shows an I-profile shaped insert 22', whose sides establish two oppositely opening slots capable of accommodating the edges 20a and 21a of the half-frames 20 and 21 (also 30 and 31). The latter arrangement provides an advantage of not having to cut the edges 20a and 21a.

It should be noted that, although the frame structure of the foregoing embodiment consists of four segments dismountable from each other, the frame structure may comprise even more segments. For example, a chain guard 13 can be regarded as a part of the frame structure, which contributes to providing a box-type assembly protecting other features of the bicycle and being also removable. Moreover, for example, it is possible for the upper frame unit 2 to consist of more segments.

Figs. 1-3 illustrate an embodiment, wherein the matching edges 20a and 21a of the connectible half-frames 20 and 21 (as well as 30 and 31) establish a straight joint section substantially lengthwise of the frame. However, depending on a frame structure, the shape and orientation of the joint section can be chosen as desired. For example, the joint section can be formed with mutually matching lugs 14a, 14b or crooks whose direction deviates substantially from the longitudinal plane of the frame.

Some advantages gained by the invention have already been described above. Another notable example is that functional characteristics of the bike can be varied by replacing a given part of the frame with a part of another type. For example, when making a switch between transmission systems operating intra-hub and extra-hub gearshifts, it is possible that one of the half-frames of the lower frame unit 3 be replaced with a sort of half-frame that enables this functional modification. Accordingly, the various sides of the frame 1 can be of different configurations according to which type of features are actually desired for the frame or the bike.

## Claims

1. A modular bicycle frame (1), comprising at least an upper frame unit (2), including two half-frames (20, 21) which are dismountably connected to each other, and a lower frame unit (3), including two half-frames (30, 31) which are dismountably connected to each other, **characterized in that** the upper frame unit (2) has its half-frames (20, 21) providing a mechanically openable box assembly, and that the lower frame unit (3) has its half-frames (30, 31) providing a mechanically openable box assembly.

2. A frame (1) as set forth in claim 1, **characterized in that** the upper frame unit (2) and the lower frame unit (3) are connected dismountably to each other.

3. A frame (1) as set forth in claim 1 or 2, **characterized in that** the upper frame unit (2) comprises a substantially forward extending frame member (2a, 2b), having its first end provided with means (2e, 2f) for connecting a stem (4) and a front fork (4a) pivotably to the frame (1), and having its second end provided with a substantially downward extending frame member (2c, 2d) which is formed with means (2g, 2h) for securing a saddle support or seat post (5) to the frame (1).

4. A frame (1) as set forth in any of the preceding claims 1-3, **characterized in that** the lower frame unit (3) comprises a substantially upward extending frame member (3c, 3d) for connecting the lower frame unit (3) to the upper frame unit (2), and said lower frame unit (3) including a substantially rearward extending frame member (3a, 3b).

5. A frame (1) as set forth in claim 4, **characterized in that** the rearward extending frame member (3a, 3b) has its first end provided with a retainer element (3g, 3h) for fitting a crankset (12) most preferably therein, and having its second end provided with brackets (3e, 3f) for mounting a rear wheel (10) rotatably on the frame (1).

6. A frame (1) as set forth in any of the preceding claims 1-5, **characterized in that** the upper frame unit's (2) half-frames (20, 21) and the lower frame unit's (3) half-frames (30, 31) are linked to each other with mechanical connections, preferably screws (6).

7. A frame (1) as set forth in any of the preceding claims 1-6, **characterized in that** the frame is manufactured in steel, magnesium, aluminum, titanium or any appropriate metal alloy, carbon fiber and/or plastics.

8. A frame (1) as set forth in any of the preceding claims 1-7, **characterized in that** the joint sections of the upper frame unit's (2) half-frames (20, 21) as well as those of the lower frame unit's (3) half-frames (30, 31) are provided with complementary male and female tongue-and-grooves (20a, 21a).

9. A frame (1) as set forth in any of the preceding claims 1-8, **characterized in that** the joint sections of the upper frame unit's (2) half-frames (20, 21) as well as those of the lower frame unit's (3) half-frames (30, 31) are provided with a separate piece (22, 22') providing a link between the half-frames (20, 21; 30, 31).

10. A frame (1) as set forth in any of the preceding claims 1-9, **characterized in that** the frame (1) has a hollow design.

11. A frame (1) as set forth in any of the preceding claims 1-10, **characterized in that** the frame (1) has its interior provided with attachment points or spots for various bicycle components.

12. A frame (1) as set forth in any of the preceding claims 1-11, **characterized in that** the upper frame unit (2) has its half-frames (20, 21) and likewise the lower frame unit (3) has its half-frames provided with means (2i, 2j; 3i, 3j) for articulating the upper frame unit (2) to the lower frame unit (3).
